# EUROPEAN PATENT APPLICATION

(11) **EP 3 557 344 A1**
(43) Date of publication of application: **23.10.2019**
(21) Application number: 18168565.2
(22) Date of filing: 20.04.2018
(51) Int. Cl.: G05B 19/05, G05B 23/02, G05B 9/02, G05B 19/042

(54) **WIND TURBINE FAULT MONITORING SYSTEM AND METHOD**

(71) Applicant: Siemens Gamesa Renewable Energy A/S, 7330 Brande (DK)
(72) Inventor: Hawkins, Samuel H., 7100 Vejle (DK)
(74) Representative: Aspacher, Karl-Georg

(57) **Abstract**

A system for fault monitoring a wind turbine is described. The system comprises (a) a first monitoring device adapted to provide a first monitoring signal, (b) a second monitoring device adapted to provide a second monitoring signal, (c) a third monitoring device adapted to provide a third monitoring signal, and (d) output logic adapted to generate a monitoring output signal indicating that a fault has occurred if at least two of the first monitoring signal, the second monitoring signal, and the third monitoring signal indicate that a fault has occurred. Furthermore, a wind turbine and a method of fault monitoring a wind turbine are described.

## Description

### Field of Invention

The present invention relates to the field of wind turbines, in particular to a system and a method for fault monitoring a wind turbine. Furthermore, the present invention relates to a wind turbine comprising such a fault monitoring system.

### Art Background

Modern wind turbines are protected by safety systems which limit their operation in order to eliminate potential structural, electrical, and other safety hazards. These safety systems may e.g. include:
- Rotor overspeed protection
- Excessive tower vibration protection
- Abnormal blade pitch motion protection
- Tower cable over-twist protection
- Operation at extreme yaw error protection
- Overcurrent protection

Depending on the severity of these hazards, the design of a safety system is required to meet functional safety requirements which are guided by international standards, such as IEC 61508, IEC 60204, and ISO 13849-1. These standards include requirements for Safety Integrity Levels (SIL) or Performance Levels (PL). In order to achieve a satisfactory SIL or PL for hazards with severe consequences, the use of redundancy is typically required, such as in a Category 3 safety system.

In order to develop a redundant Category 3 system, designers often use two-channel systems. In a two-channel system there are two redundant channels which both contain sensor, processing, and safety outputs. If either of the channels fails or detects a hazardous event then the system will activate the safety function. There is also typically a feature called cross-monitoring where the signals from one of the two channels are compared to the other. Once again, if either of the channels detects a difference between its signals or measurements and the other channel, then the safety function will be activated.

The above-mentioned two-channel system is excellent from a safety point-of-view. However, it is very susceptible to single component faults or faults in the sensor information. The result is that in wind turbines, there are often safety system activations which are false-positives. These activations are not related to a hazardous event, such as a rotor overspeed, but instead to faulty information or processing, such as a bad signal from a single rotor speed sensor or a fault in the microprocessor used in a single channel.

In order to be cost-effective, modern wind turbines must operate for months without unplanned stoppages. Therefore, it is very important to avoid false-positive activations of safety systems which will bring a wind turbine out of operation and may take many hours or days to diagnose and repair or return to operation. In the meantime a large amount of lost production will have occurred.

At the same time, safety systems must continue to be very sensitive and have fast reaction times to actual hazards. Structural and electrical hazards in particular require very fast reaction times to ensure that when a hazardous event does occur, it is detected and mitigated as quickly as possible.

Accordingly, there is a need for improved safety systems which are less susceptible to single component failure while at least maintaining the high sensitivity and reaction speed of the known systems.

### Summary of the Invention

This need may be met by the subject matter according to the independent claims. Advantageous embodiments of the present invention are set forth in the dependent claims.

According to a first aspect of the invention, there is provided a system for fault monitoring a wind turbine. The described system comprises (a) a first monitoring device adapted to provide a first monitoring signal, (b) a second monitoring device adapted to provide a second monitoring signal, (c) a third monitoring device adapted to provide a third monitoring signal, and (d) output logic adapted to generate a monitoring output signal indicating that a fault has occurred if at least two of the first monitoring signal, the second monitoring signal, and the third monitoring signal indicate that a fault has occurred.

This aspect of the invention is based on the idea that a fault is only determined to have occurred if at least two of three independent monitoring devices operating in parallel indicate that a fault has occurred. In other words, if two or three of the monitoring devices provide monitoring signals indicating that a fault has occurred, then the output logic decides that a fault has actually occurred. On the other hand, if only a single monitoring device indicates that a fault has occurred, then the output logic will decide that this is a false positive and therefore not generate a monitoring output signal indicating that a fault has occurred.

Accordingly, the system according to the first aspect is capable of providing reliable fault detection with a significantly reduced risk of false positives caused e.g. by a defect in a single monitoring device.

According to an embodiment of the invention, the output logic comprises (a) a first switching device coupled to receive the first monitoring signal, (b) a second switching device coupled to receive the second monitoring signal, and (c) a third switching device coupled to receive the third monitoring signal.

In this embodiment, the first, second and third switching device receives respectively the first, second and third monitoring signal. Thereby, each of the switching devices may switch in dependency of the respective monitoring signal. When at least two of the switching devices are switched to indicate the presence of a fault, the output logic will indicate that a fault has occurred.

According to a further embodiment of the invention, the first switching device, the second switching device, and the third switching device are interconnected such that a connection between a first terminal and a second terminal is closed when at least two of the first monitoring signal, the second monitoring signal, and the third monitoring signal indicate that a fault has occurred.

In this embodiment, the switching devices are interconnected in such a way that the first and second terminals are connected when at least two of the three monitoring signals indicated the presence of a fault. In other words, the monitoring output signal generated by the output logic corresponds to a certain current (above a predetermined threshold) flowing between the first and second terminals.

Alternatively, depending on the overall design of the system, the connection may be opened when at least two of the three monitoring signals indicate the presence of a fault. In this case, the monitoring output signal generated by the output logic corresponds to no or only a negligible current (below a predetermined threshold) flowing between the first and second terminals.

According to a further embodiment of the invention, the first switching device comprises first switching elements adapted to open and close in dependency of the first monitoring signal, the second switching device comprises second switching elements adapted to open and close in dependency of the second monitoring signal, and the third switching device comprises third switching elements adapted to open and close in dependency of the third monitoring signal. Furthermore, one of the first switching elements and one of the second switching elements are connected in series between the first terminal and the second terminal, another one of the first switching elements and one of the third switching elements are connected in series between the first terminal and the second terminal, and another one of the second switching elements and another one of the third switching elements are connected in series between the first terminal and the second terminal.

In this embodiment, each of the first, second and third switching device comprises a plurality of switching elements (or switches, such as relays or semiconductor switches) which are interconnected between the first and second terminals in such a way that three parallel connections are possible between the terminals. One of these connections is formed by one of the first switching elements (i.e. one of the switching elements in the first switching device) and one of the second switching elements (i.e. one of the switching elements in the second switching device) connected in series, another possible connection is formed by another one of the first switching elements and one of the third switching elements (i.e. one of the switching elements in the third switching device) connected in series, and the third possible connection is formed by another one of the second switching elements and another one of the third switching elements connected in series. Thereby, if the two switching elements within one of the parallel connections are both closed, the first terminal will be connected to the second terminal.

According to a further embodiment of the invention, the output logic comprises a programmable logic controller, the programmable logic controller comprising a first input connected to the first switching device, a second input connected to the second switching device, a third input connected to the third switching device, and a processing unit adapted to generate the monitoring output signal.

In this embodiment, a programmable logic controller (PLC) is used to determine whether at least two of the first, second and third switching devices are switched to indicate the presence of a fault.

According to a further embodiment of the invention, the first switching device comprises a first switching element adapted to open and close in dependency of the first monitoring signal, the second switching device comprises a second switching element adapted to open and close in dependency of the second monitoring signal, and the third switching device comprises a third switching element adapted to open and close in dependency of the third monitoring signal. Furthermore, the processing unit is adapted to generate the monitoring output signal indicating that a fault has occurred when at least two of the first switching element, the second switching element, and the third switching element are closed.

In this embodiment, the processing unit of the programmable logic controller determines whether at least two of the first, second and third switching elements are closed and generates the output monitoring signal indicating the presence of a fault if this is the case.

Alternatively, depending on the overall design of the system, the processing unit may instead generate the monitoring output signal indicating that a fault has occurred when at least two of the first switching element, the second switching element, and the third switching element are open.

According to a further embodiment of the invention, the output logic comprises a communication interface and a programmable logic controller, the programmable logic controller comprising an input interface and a processing unit adapted to generate the monitoring output signal, wherein the communication interface is adapted to receive the first monitoring signal, the second monitoring signal, and the third monitoring signal, and to provide a corresponding composite monitoring signal to the input interface.

In other words, the first, second and third monitoring signals are communicated to the programmable logic controller via a communication interface, such as a PROFIsafe communication interface.

According to a further embodiment of the invention, the first monitoring device comprises a first sensor unit and a first processing unit, the second monitoring device comprises a second sensor unit and a second processing unit, and the third monitoring device comprises a third sensor unit and a third processing unit.

In other words, each monitoring device comprises a dedicated sensor unit and a dedicated processing unit. The processing unit may in particular compare a signal received from the sensor to one or more thresholds in order to determine whether the corresponding monitoring signal shall indicate presence of a fault or not.

According to a further embodiment of the invention, each of the first sensor unit, the second sensor unit and the third sensor units are selected from a group comprising rotor speed sensors, tower vibration sensors, blade pitch sensors, tower bend sensors, wind direction sensors, electrical current sensors, and temperature sensors.

The above-mentioned sensors allow monitoring of a variety of faults. In addition to the exemplary sensors mentioned above, the sensor units may comprise any other sensors that are useful for monitoring fault relevant parameters of a wind turbine.

According to a further embodiment of the invention, the first monitoring device comprises first cross-monitoring logic adapted to generate a first peer error signal if the first monitoring signal differs from both the second monitoring signal and the third monitoring signal, the second monitoring device comprises second cross-monitoring logic adapted to generate a second peer error signal if the second monitoring signal differs from both the first monitoring signal and the third monitoring signal, and the third monitoring device comprises third cross-monitoring logic adapted to generate a third peer error signal if the third monitoring signal differs from both the first monitoring signal and the second monitoring signal.

In other words, each of the cross-monitoring logics determines whether the monitoring signal of its own monitoring device differs from both respective monitoring signals of the other two monitoring devices and, if this is the case, generates a corresponding peer error signal.

The peer error signal may in particular be used to schedule maintenance of the apparently defective monitoring device.

According to a second aspect of the invention, there is provided a wind turbine comprising a system according to the first aspect or any of the embodiments described above.

This aspect of the invention is based on the same idea as the first aspect described above and uses the corresponding system to improve safety monitoring in a wind turbine.

According to a third aspect of the invention, there is provided a method of fault monitoring a wind turbine. The described method comprises (a) providing a first monitoring signal, (b) providing a second monitoring signal, (c) providing a third monitoring signal, and (d) generating a monitoring output signal indicating that a fault has occurred if at least two of the first monitoring signal, the second monitoring signal, and the third monitoring signal indicate that a fault has occurred.

This aspect of the invention is based on the same idea as the first aspect described above.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

Figure 1 shows a fault monitoring system according to an embodiment of the present invention.
Figure 2 shows a cross-monitoring logic according to an embodiment of the present invention.
Figure 3 shows a fault monitoring system according to an embodiment of the present invention.
Figure 4 shows a fault monitoring system according to an embodiment of the present invention.

### Detailed Description

The illustration in the drawing is schematic. It is noted that in different figures, similar or identical elements are provided with the same reference numerals or with reference numerals which differ only within the first digit.

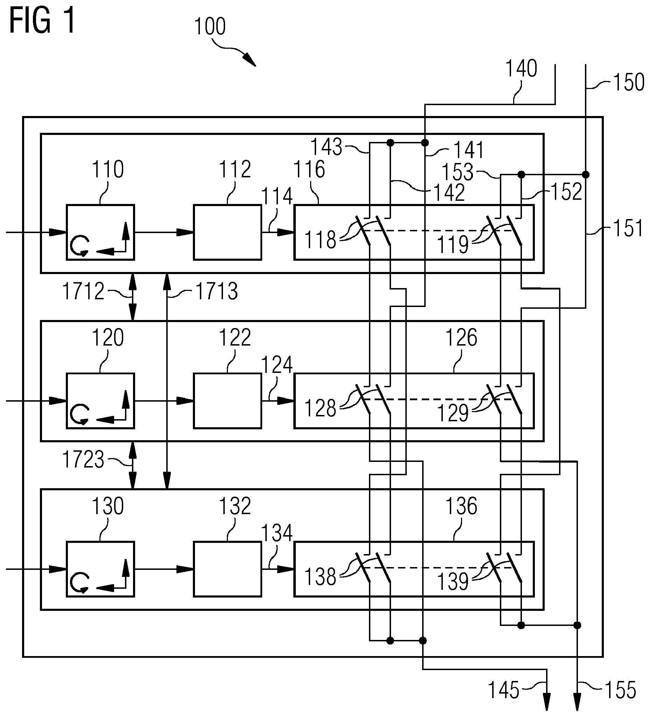

Figure 1 shows a fault monitoring system 100 according to an embodiment of the present invention. More specifically, the fault monitoring system 100 comprises three (first, second and third) separate and independent monitoring devices, each providing a respective monitoring signal indicative of the current monitoring status, and output logic for generating a monitoring output signal based on the first, second and third monitoring signals. The output monitoring signal indicates that a fault has occurred when at least two (i.e. two or three) of the three monitoring signals indicate a fault.

The first monitoring device comprises a first sensor unit 110 and a first processing unit 112. The second monitoring device comprises a second sensor unit 120 and a second processing unit 122. The third monitoring device comprises a third sensor unit 130 and a third processing unit 132. The sensor units 110, 120 and 130 are identical or at least very similar, and may particularly include rotor speed sensors, tower vibration sensors, blade pitch sensors, tower bend sensors, wind direction sensors, electrical current sensors, and temperature sensors. However, the sensor units 110, 120, 130 may comprise any other sensors that are useful for monitoring fault relevant parameters of a wind turbine. The processing units 112, 122, 132 are also identical or at least very similar and configured to process the respective sensor signals to determine whether a fault is present or not, e.g. by comparing the sensor outputs with one or more thresholds. Each processing unit 112, 122 and 132 outputs a corresponding monitoring signal 114, 124, 134 indicating whether the respective monitoring device has detected a fault or not.

The output logic comprises a first switching device 116 receiving the first monitoring signal 114 as an input or control signal, a second switching device 126 receiving the second monitoring signal 124 as an input or control signal, and a third switching device 136 receiving the third monitoring signal 134 as an input or control signal.

The first switching device 116 comprises two switches 118 and two switches 119 which are all closed or open in dependency of the first monitoring signal 114. The second switching device 126 comprises two switches 128 and two switches 129 which are all closed or open in dependency of the second monitoring signal 124. The third switching device 136 comprises two switches 138 and two switches 139 which are all closed or open in dependency of the third monitoring signal 134.

The switches 118, 128, and 138 are interconnected such that a connection between terminals 140 and 145 is closed when the switches 118, 128, and 138 of at least two of the switching devices 116, 126, and 136 are closed. More specifically, the switches 118, 128, and 138 are connected in three pairs across the switching devices 116, 126, 136, thereby forming three respective parallel paths 141, 142, 143 between the terminals 140 and 145. The path 141 comprises one of the switches 128 (in the second switching device 126) and one of the switches 138 (in the third switching device 136) connected in series. The path 142 comprises one of the switches 118 (in the first switching device 116) and the other one of the switches 138 (in the third switching device 136) connected in series. The path 143 comprises the other one of the switches 118 (in the first switching device 116) and the other one of the switches 128 (in the second switching device 126) connected in series.

Thereby, a connection is formed between the terminals 140 and 145 if the switches 118, 128, 138 of at least two of the switching devices 116, 126, 136 are closed. Similarly, if the switches 118, 128, 138 of at least two of the switching devices 116, 126, 136 are open, no connection is formed between the terminals 140 and 145. Thus, the system can be implemented to indicate a fault by closing or opening the connection between the terminals 140 and 145 as desired.

The output logic shown in Figure 1 comprises a further set of switches 119, 129, 139 which are interconnected in the same manner to form paths 151, 152, 153 between terminals 150 and 155. This part of the output logic is redundant and may be omitted if the additional safety provided by the redundant logic is not considered necessary.

Each of the first, second and third monitoring devices further comprises respective cross-monitoring logic (not shown in Figure 1) for determining whether its own sensor output and/or monitoring signal deviates from the sensor output and/or monitoring signals of the other two monitoring devices. If such a deviation is detected, the monitoring device generates a peer error signal indicating that a defect or error appears to be present in the monitoring device.

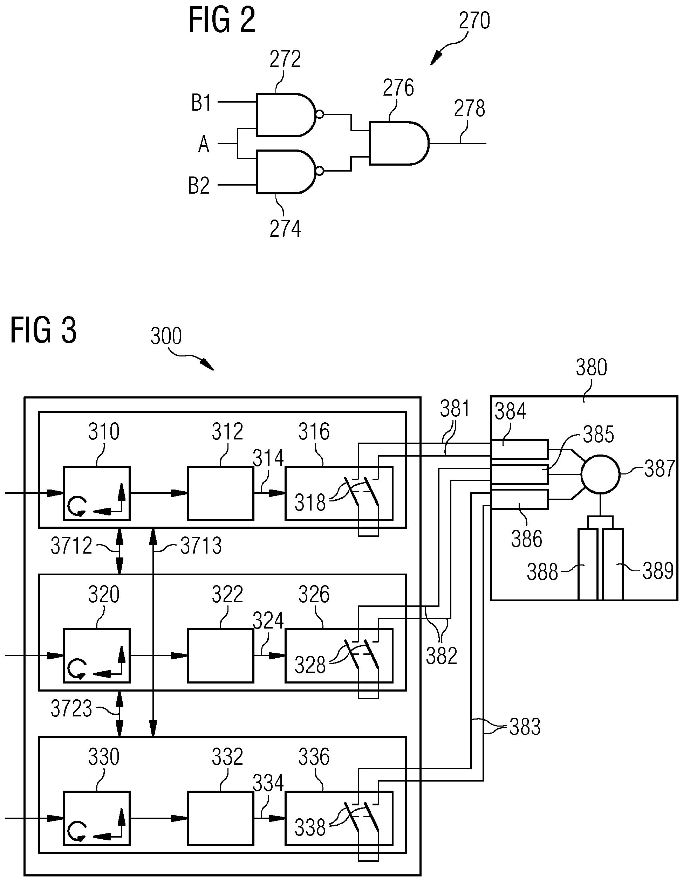

Figure 2 shows a cross-monitoring logic 270 according to an embodiment of the present invention. The logic 270 comprises a first NAND gate 272, a second NAND gate 274, and an AND gate 276. The first NAND gate 272 receives the relevant value A of the monitoring device comprising the logic 270 and the relevant value B1 from one of the other monitoring devices as inputs. Referring to Figure 1 and assuming that the cross-monitoring logic 270 is comprised by the first monitoring device, the value B may be received from the second monitoring device via connection 1712. The second NAND gate 274 also receives the value A and the relevant value B2 from the other one of the other monitoring devices as inputs. The value B2 may be received from the third monitoring device in Figure 1 via connection 1713. The outputs of the first and second NAND gates 272, 274 are supplied to the respective inputs of AND gate 276. The output 278 of AND gate 276 is the peer error signal referred to above.

Returning to Figure 1, it is noted that the cross-monitoring logic of the first monitoring device receives the relevant values from the two other (second and third) monitoring devices via connections 1712 and 1713. The cross-monitoring logic of the second monitoring device receives the relevant values from the two other (first and third) monitoring devices via connections 1712 and 1723. The cross-monitoring logic of the third monitoring device receives the relevant values from the two other (first and second) monitoring devices via connections 1713 and 1723.

Figure 3 shows a fault monitoring system 300 according to another embodiment of the present invention. The system 300 differs from the system 100 described above in the structure of the output logic. The sensor units 310, 320, 330, processing units 312, 322, 332 and cross-monitoring logic (including connections 3712, 3713, 3723) are similar to the sensor units 110, 120, 130, processing units 112, 122, 132, and cross-monitoring logic described above in conjunction with Figure 1 and Figure 2.

More specifically, in the embodiment shown in Figure 3, the output logic comprises a first switching circuit 316 having two switching elements 318, a second switching circuit 326 having two switching elements 328, a third switching circuit 336 having two switching elements 338, and a programmable logic controller (PLC) 380. The PLC 380 has a first input 384 connected to the switches 318 by electrical connection 381, a second input 385 connected to the switches 328 by electrical connection 382, a third input 386 connected to the switches 338 by electrical connection 383, and a processing unit 387 for determining whether at least two of the monitoring signals 314, 324, 334 indicate a fault and generating corresponding (redundant) monitoring output signals 388, 389. Thus, in comparison to the embodiment shown in Figure 1, the system 300 has a less complex switching structure and instead relies on a PLC 380 for assessing the three monitoring output signals 314, 324, 334.

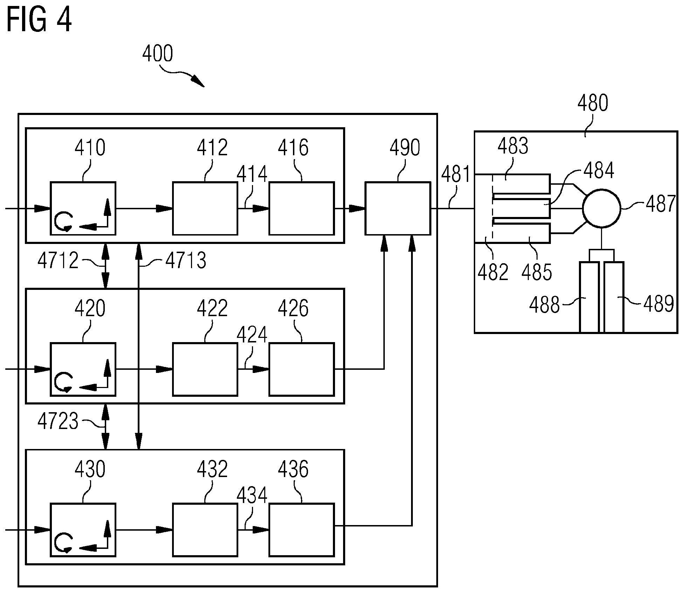

Figure 4 shows a fault monitoring system 400 according to a further embodiment of the present invention. The system 400 differs from the systems 100 and 300 described above in the structure of the output logic. The sensor units 410, 420, 430, processing units 412, 422, 432 and cross-monitoring logic (including connections 4712, 4713, 4723) are similar to the sensor units 110, 120, 130, 3210, 320, 330, processing units 112, 122, 132, 312, 322, 332, and cross-monitoring logic described above in conjunction with Figures 1 to 3.

More specifically, in the embodiment shown in Figure 4, the output logic comprises a first output circuit 416, a second output circuit 426, a third output circuit 436, a programmable logic controller (PLC) 480, and a communication interface 490, such as a PROFIsafe communication interface.

The PLC 480 comprises an input interface 482 for communication with the communication interface 490, a first signal path 483, a second signal path 484, a third signal path 485, and a processing unit 487 for determining whether at least two of the monitoring signals 414, 424, 434 indicate a fault and generating corresponding (redundant) monitoring output signals 488, 489.

The communication interface 490 receives the monitoring output signals 414, 424, 434 via the output circuits 416, 426, 436 and transmits a corresponding signal to the input interface 482 of the PLC 480. The input interface 482 extracts the monitoring signals 414, 424, 434 and forwards these as respective inputs to the processing unit 487 via the signals paths 483, 484, 485.

In comparison to the embodiment shown in Figures 1 and 3, the system 400 does not use switches at all and instead relies on a communication interface 490 and a PLC 480 for assessing the three monitoring output signals 414, 424, 434 received via the communication interface 490.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A system for fault monitoring a wind turbine, the system comprising
a first monitoring device adapted to provide a first monitoring signal (114, 314, 414),
a second monitoring device adapted to provide a second monitoring signal (124, 324, 424),
a third monitoring device adapted to provide a third monitoring signal (134, 334, 434), and
output logic adapted to generate a monitoring output signal indicating that a fault has occurred if at least two of the first monitoring signal, the second monitoring signal, and the third monitoring signal indicate that a fault has occurred.

2. The system according to the preceding claim, wherein the output logic comprises
a first switching device (116, 316) coupled to receive the first monitoring signal,
a second switching device (126, 326) coupled to receive the second monitoring signal, and
a third switching device (136, 336) coupled to receive the third monitoring signal.

3. The system according to the preceding claim, wherein the first switching device, the second switching device, and the third switching device are interconnected such that a connection between a first terminal (140, 150) and a second terminal (145, 155) is closed when at least two of the first monitoring signal, the second monitoring signal, and the third monitoring signal indicate that a fault has occurred.

4. The system according to the preceding claim,
wherein the first switching device comprises first switching elements (118, 119) adapted to open and close in dependency of the first monitoring signal, the second switching device comprises second switching elements (128, 129) adapted to open and close in dependency of the second monitoring signal, and the third switching device comprises third switching elements (138, 139) adapted to open and close in dependency of the third monitoring signal, and
wherein one of the first switching elements and one of the second switching elements are connected in series between the first terminal and the second terminal, another one of the first switching elements and one of the third switching elements are connected in series between the first terminal and the second terminal, and another one of the second switching elements and another one of the third switching elements are connected in series between the first terminal and the second terminal.

5. The system according to claim 2, wherein the output logic comprises a programmable logic controller (380), the programmable logic controller (380) comprising a first input (384) connected to the first switching device (316), a second input (385) connected to the second switching device (326), a third input (386) connected to the third switching device (336), and a processing unit (387) adapted to generate the monitoring output signal (388, 389).

6. The system according to the preceding claim,
wherein the first switching device comprises a first switching element (318) adapted to open and close in dependency of the first monitoring signal, the second switching device comprises a second switching element (328) adapted to open and close in dependency of the second monitoring signal, and the third switching device comprises a third switching element (338) adapted to open and close in dependency of the third monitoring signal, and
wherein the processing unit (387) is adapted to generate the monitoring output signal (388, 389) indicating that a fault has occurred when at least two of the first switching element (318), the second switching element (328), and the third switching element (338) are closed.

7. The system according to claim 1, wherein the output logic comprises a communication interface (490) and a programmable logic controller (480), the programmable logic controller (480) comprising an input interface (482) and a processing unit (487) adapted to generate the monitoring output signal (488, 489), wherein the communication interface is adapted to receive the first monitoring signal (414), the second monitoring signal (424), and the third monitoring signal (434), and to provide a corresponding composite monitoring signal (481) to the input interface (482).

8. The system according to any of the preceding claims, wherein the first monitoring device comprises a first sensor unit (110, 310, 410) and a first processing unit (112, 312, 412), the second monitoring device comprises a second sensor unit (120, 320, 420) and a second processing unit (122, 322, 422), and the third monitoring device comprises a third sensor unit (130, 330, 430) and a third processing unit (132, 332, 432).

9. The system according to the preceding claim, wherein each of the first sensor unit, the second sensor unit and the third sensor units are selected from a group comprising rotor speed sensors, tower vibration sensors, blade pitch sensors, tower bend sensors, wind direction sensors, electrical current sensors, and temperature sensors.

10. The system according to any of the preceding claims, wherein the first monitoring device comprises first cross-monitoring logic adapted to generate a first peer error signal if the first monitoring signal differs from both the second monitoring signal and the third monitoring signal, the second monitoring device comprises second cross-monitoring logic adapted to generate a second peer error signal if the second monitoring signal differs from both the first monitoring signal and the third monitoring signal, and the third monitoring device comprises third cross-monitoring logic adapted to generate a third peer error signal if the third monitoring signal differs from both the first monitoring signal and the second monitoring signal.

11. A wind turbine comprising a system according to any of the preceding claims.

12. A method of fault monitoring a wind turbine, the method comprising
providing a first monitoring signal (114, 314, 414),
providing a second monitoring signal (124, 324, 424),
providing a third monitoring signal (134, 334, 434), and
generating a monitoring output signal indicating that a fault has occurred if at least two of the first monitoring signal, the second monitoring signal, and the third monitoring signal indicate that a fault has occurred.
